(19) Europäisches Patentamt
European Patent Office
Office européen des brevets

(11) **EP 3 425 864 A1**

(12) **EUROPEAN PATENT APPLICATION**

(43) Date of publication:
**09.01.2019 Bulletin 2019/02**

(51) Int Cl.:
***H04L 27/26*** $^{(2006.01)}$

(21) Application number: **17179951.3**

(22) Date of filing: **06.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Intel IP Corporation
Santa Clara, CA 95054 (US)**

(72) Inventors:
• SCHERB, Ansgar
  91207 Nürnberg (DE)
• ZHOU, Guangxia
  85579 Neubiberg (DE)
• HESSAMIAN-ALINEJAD, Arjang
  90491 Nürnberg (DE)

(74) Representative: **Viering, Jentschura & Partner mbB**
**Patent- und Rechtsanwälte**
**Am Brauhaus 8**
**01099 Dresden (DE)**

(54) **COMMUNICATION DEVICE AND METHOD FOR ESTIMATING A FREQUENCY OFFSET**

(57)    A communication device is described comprising a receiver configured to generate a received synchronization signal in response to receiving a synchronization signal, a first correlator configured to generate a correlation signal by correlating the received synchronization signal with a reference synchronization signal, a delay line configured to delay the correlation signal by each of a plurality of delays, a second correlator for each delay configured to correlate the delayed correlation signal with the correlation signal, one or more normalizers configured to generate one or more normalized correlation values, wherein the one or more normalizers comprise a normalizer for each delay different from a reference delay configured to generate a normalized correlation signal by normalizing, with respect to the reference delay, a correlation value which is based on the correlation of the delayed correlation signal with the correlation signal and a frequency offset estimator configured to estimate a frequency offset based on the one or more normalized correlation values.

**FIG 5**

## Description

### Technical Field

Exemplary implementations described herein generally relate to communication devices and methods for estimating a frequency offset.

### Background

A frequency offset in a communication device, e.g. with respect to a carrier signal, occurs when a local oscillator signal for down-conversion in the communication device's receiver does not synchronize with the carrier signal. This can be due to frequency mismatch in the transmitter and the receiver oscillators and the Doppler Effect as the transmitter or the receiver or both are moving. When this occurs, a received signal is shifted in frequency. However, for example for an OFDM (Orthogonal Frequency Division Multiplexing) system, orthogonality among sub carriers is maintained only if the receiver uses a local oscillation signal that is synchronous with the carrier signal contained in the received signal. Otherwise, mismatch in carrier frequency can result in inter-carrier interference (ICI).

Typically, the oscillators in a transmitter and a receiver never oscillate at identical frequencies. Hence, a certain carrier frequency offset always exists even if there is no Doppler effect. Therefore, efficient approaches for frequency offset estimation are desirable.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a communication system, e.g. an LTE (Long Term Evolution) communication system.
Figure 2    shows a multi-lag autocorrelation function based frequency offset estimator operating in time domain.
Figure 3    shows a performance comparison of a frequency offset estimator with phase normalization, a frequency offset estimator without phase normalization and a theoretically achievable performance.
Figure 4    shows a multi-lag autocorrelation function based frequency offset estimator operating in frequency domain
Figure 5    shows a communication device.
Figure 6    shows a flow diagram illustrating a method for estimating a frequency offset.

### Description of Exemplary Implementations

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

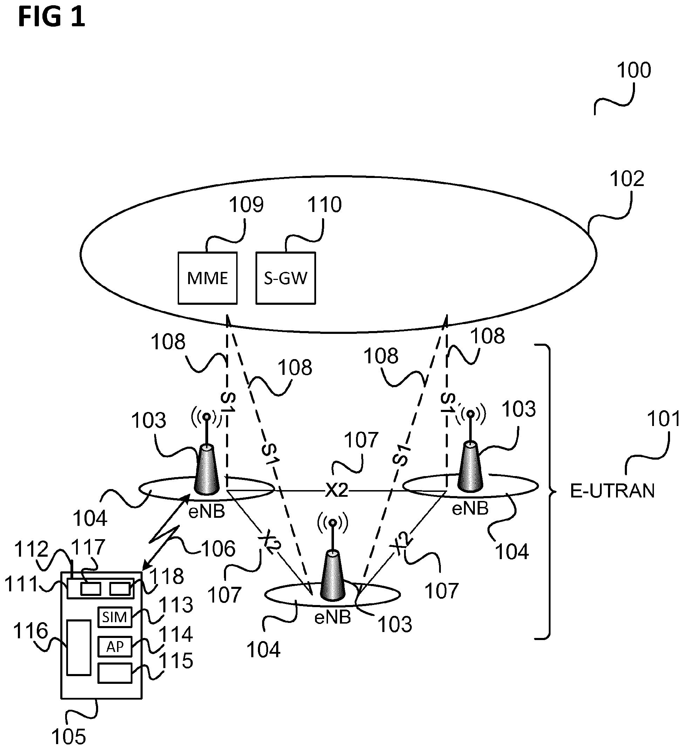

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in a mobile radio cell 104 may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

The radio access network 101 and the core network may support communication according to various communication technologies, e.g. mobile communication standards, wherein the figure 1 includes the terms according to LTE (like "eNB" for base station). For example, each base station 103 may provide a radio communication connection via the air interface between itself and the mobile terminal 105 according to LTE (4G), UMTS, GSM (Global System for Mobile Communications), EDGE (Enhanced Data Rates for GSM Evolution) radio access or 5G. Accordingly, the radio access network 102 may operate as an E-UTRAN, a UTRAN, a GSM radio access network, a GERAN (GSM EDGE Radio Access Network) or a 5G radio access network. Analogously, the core network 102 may include the functionality of an EPC, a UMTS core network, a GSM core network or a 5G core network.

The mobile terminal 105 may for example be a portable phone and may include typical communication terminal components such as a transceiver, an antenna, a subscriber identity module, an application processor, a memory, a display, a battery, a speaker, a microphone etc.

For radio communication via the air interface 106, the mobile terminal 105 includes a communication subsystem 111 (or possibly multiple communication subsystems) and one or more antennas 112 and one or more multiple subscriber identity modules 113. The mobile terminal 105 also includes an application processor 114 as well as a main memory 115 for running applications. The mobile terminal 105 further includes a battery 116 for power supply. The mobile terminal 105 may include further components such as a display, a speaker, a microphone etc. The communication subsystem 111 supports communication via the radio access technology used by the radio access network 101 and includes baseband processing functionality and radio frequency processing functionality. For providing the baseband functionality, the communication subsystem 111 may for example include a baseband processor 117 which may include hardware accelerators for performing a Fast Fourier Transformation, for performing a Turbo Decoding, a MIMO (Multiple-Input Multiple-Output) modulation etc. For the radio frequency processing functionality, the communication subsystem 111 may include one or more filters, one or more mixers, one or more amplifiers etc. The communication subsystem 111 in particular includes an oscillator 118 which provides a frequency allowing to tune the communication subsystem 111 to the correct transmission frequency (or frequencies).

Typically, frequency offset estimation is one of the key tasks in baseband digital signal processing of mobile communication systems. For example, the baseband processor 117 performs frequency offset estimation when the mobile terminal (or user device) is connecting to a cell 104 (e.g. in case of a handover from another cell 104 or after being switched on) for initial frequency synchronization and performs the frequency offset estimation repeatedly in regular time intervals in order to measure and compensate carrier frequency variations due to UE mobility (Doppler effect) and oscillator jitter (e.g. jitter of the oscillator 118).

Recently discussed new radio access technologies such as for e.g. NB-IoT (Narrow Band Internet of Things) and Machine Type Communication (MTC) in 4G and 5G significantly tighten the requirements under which reliable frequency offset estimates need to be obtained. For example, the worst case initial carrier frequency offset in a typical NB-IoT scenario might be up to 30 KHz, low cost oscillator in NB-Iot/MTC devices leads to high frequency drift (e.g., ±20ppm between -30 to 85°C) and the operational SNR (Signal to Noise ratio) range where the estimator needs to provide reliable measures might stretch down to -15 dB SNR.

In the following, approaches for frequency offset estimation are described which can be seen to be based on an extension of a multi-lag auto-correlation based frequency offset estimator in which multiple autocorrelation bins representing a received signal autocorrelation function (ACF) at different lags are summed up and a frequency offset estimate is determined by evaluating the phase of the summand. In the approaches described in the following the ACF bins are normalized with respect to its phase before summing up them. This allows achieving a better performance and robustness against high frequency offsets.

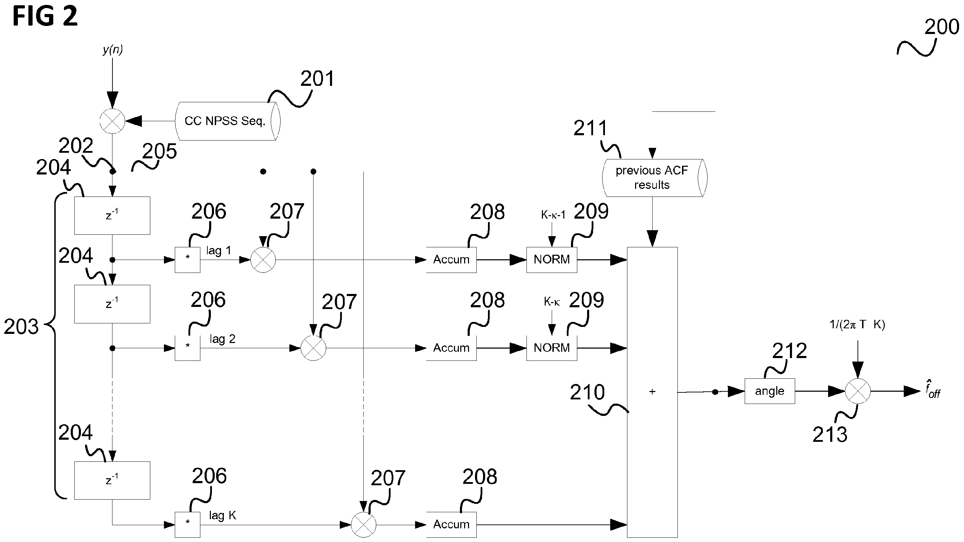

Figure 2 shows a multi-lag autocorrelation function (ACF) based frequency offset (FO) estimator 200.

Let y(n) be the baseband discrete time received signal in time domain, e.g. provided by frontend components of the communication subsystem 111 and e.g. sampled at a rate of 240 kHz. It can be expressed as

$$y(n) = \sum_{v=0}^{L-1} h(v)s(n-v)\exp(-j2\pi T_s f_{off} n) + v(n) \qquad (1)$$

where h(v) is the channel impulse response of length L, s(n) is the transmitted NPSS signal, v(n) is Gaussian noise, $T_s$ is the sampling duration and $f_{off}$ is the frequency offset.

The received signal y(n) is fed into the multi-lag CFO (i.e. ACF based frequency offset) estimator 200. The conjugate complex of an a-priori known NPSS (narrowband primary synchronization signal) sequence is stored in a first internal device storage 201 and multiplied to the received signal by a first multiplier 202 for the purpose of demodulation.

In order to generate a set of ACF bins at various lags, a tapped delay line 203 with multiple delay elements 204 is delaying the demodulated received signal by one sample per each delay element 204 (i.e. by the time between two samples, e.g. corresponding to a sampling time of $T_S$=1/240kHz). Apart from a path 205 carrying the actual (i.e.

undelayed) received signal the delayed signal branches carrying the delayed received signal (for the different delays) are complex conjugated by respective conjugation elements 206 and multiplied by respective second multipliers 207 with the non-delayed signal from path 205. At each delayed signal branch the signal is accumulated over the NPSS sequence length by accumulators 208.

The signal at the output of the accumulator of the kth delayed signal branch (k= 1,..,K) is referred to as ACF bin and can be written as

$$z_k = \sum_{n=0}^{M-1} y(n)y^*(n-k)s^*(n)s(n-k) \qquad (2)$$

(wherein the summation over the sub-carriers is omitted for simplicity).

Here, M is the NPSS sequence length and represents an estimate of the auto correlation function at lag k, i.e. at the kth delayed signal branch which includes k delay elements 204. For a certain lag an estimate of the frequency offset can be obtained by evaluating the argument (phasor) of the ACF bin, e.g.

$$\hat{f}_{off} = \frac{\arg(z_k)}{j2\pi T_s k} \qquad (3)$$

As can be seen, the denominator in equation (3) depends on the lag, namely the number of delay elements k. In order to combine ACF bins of different lags a normalization in terms of phase is performed by respective normalizers 209 (except for the Kth branch, whose delay $T_s K$ is selected as reference delay in this example). The highest utilized lag K is selected with respect to the maximum potential frequency offset. Considering a sampling frequency of 240 KHz and a coverage range of +-30 KHz, the maximum lag is 3. Let e.g. $\hat{z}_K$ be the reference ACF bin and $\hat{z}_{K-\kappa}$ be another ACF bin with some positive integer $\kappa$. The kth Lag k= K - $\kappa$ can be normalized with respect to reference lag K by following operation

$$\tilde{z}_\kappa = |\hat{z}_{K-\kappa}| \left(\frac{\hat{z}_{K-\kappa}}{|\hat{z}_{K-\kappa}|}\right)^{K/(K-\kappa)} \qquad (4)$$

The phase normalized ACF bins (outputs of normalizers 209) are summed up by a second adder 210. To average over several NPSS periods, one or more previous ACF results (i.e. outputs of second adder 210) are stored in a second internal storage 211 and added to the current normalizer outputs by the second adder 210.

The output of the second adder 210, referred to as accumulated ACF bin, can be written as

$$\bar{z}_K(p) = \bar{z}_K(p-1) + \sum_{\kappa=1}^{K} \tilde{z}_\kappa \qquad (5)$$

where p is the NPSS period counter.

Finally, an angle extractor 212 extracts the angle of the accumulated ACF bin. A divider 213 divides this angle by $2\pi T_s K$. The output of the divider 213 can be written as

$$\hat{f}_{off} = \frac{\arg(\bar{z}_K(p))}{2\pi T_s K} \qquad (6)$$

The estimated frequency offset may then for example be used to adjust a frequency signal provided by the oscillator 117. The adjusted frequency signal may then for example be used to tune one or more frontend components of the communication subsystem 111 to a communication frequency.

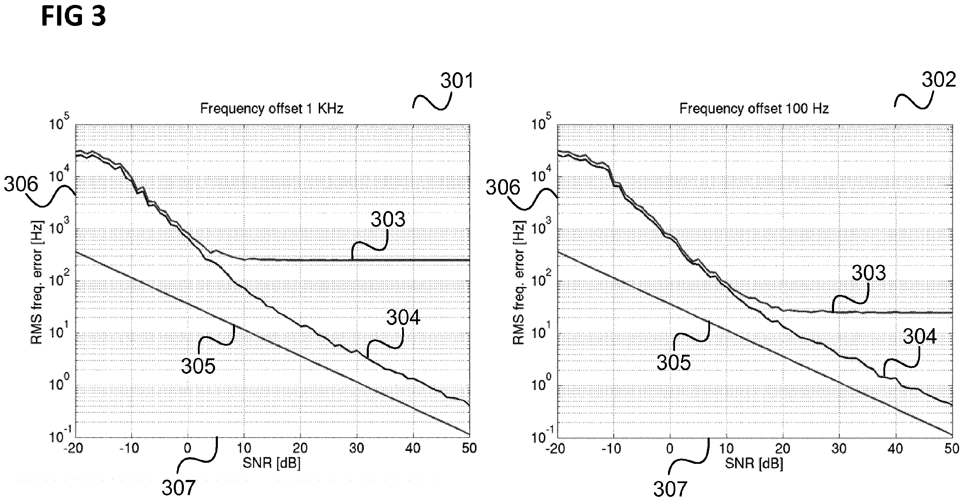

Figure 3 shows a performance comparison of a multi-lag CFO estimator with phase normalization (first curves 304), a multi-lag CFO estimator without phase normalization (second curves 303) as well as the Cramer-Rao Lower Bound (line 305) which is the theoretically highest achievable performance.

A first diagram 301 shows the performance comparison for a frequency offset of 1 kHz and a second diagram 302 shows the performance comparison for a frequency offset of 100 Hz.

The performance is given in terms of RMS (root mean square) of the frequency error (along the vertical axis 306) versus SNR in dB (along the horizontal axis 307). As can be seen, the multi-lag CFO estimator with phase normalization as for example described with reference to figure 2 performs slightly better in the low SNR range and does not suffer from an error floor in the high SNR range.

The multi-lag frequency offset estimator as described with reference to figure 2 can also be used for frequency tracking.

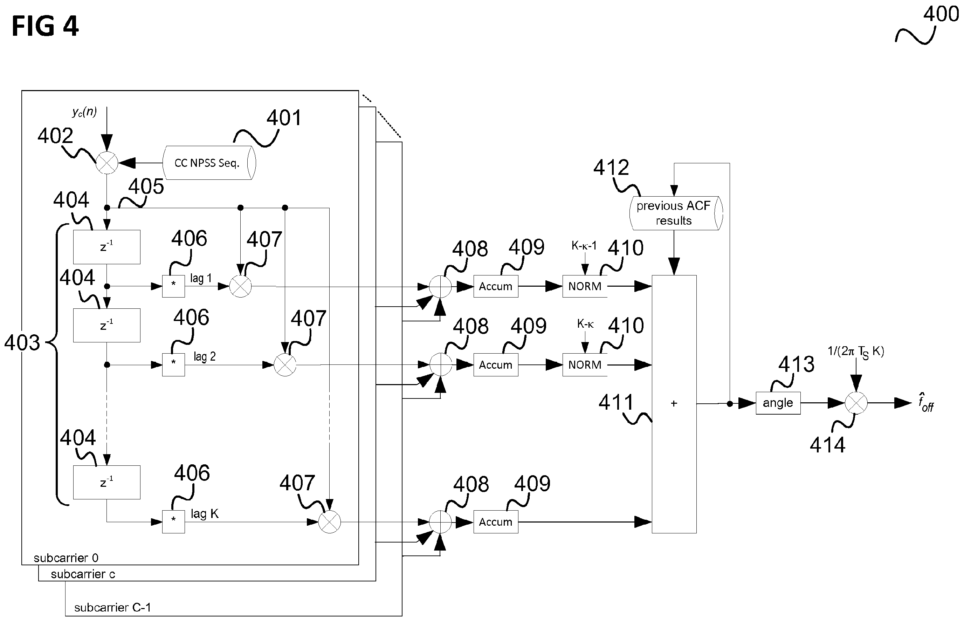

Figure 4 shows a multi-lag autocorrelation function based frequency offset estimator 400 operating in frequency domain.

In this case, y(n) is the received signal in frequency domain after cyclic prefix removal, FFT (Fast Fourier Transformation) and demapping. It can be expressed as

$$y_c(n) = h_c(n)s_c(n)\exp(j2\pi f_{off}nT_s) + v_c(n) \qquad (7)$$

where s(n) is the transmitted reference signal (RS), v(n) is Gaussian noise, $T_s$ is the sampling duration and $f_{off}$ is the frequency offset.

The received signal y(n) is fed into the multi-lag frequency offset estimator 400. In this case, the conjugate complex of the RS sequence is stored in a first internal device storage 401 and multiplied to the received signal by a first multiplier 402 to generate

$$\hat{h}_c(n) = h_c^*(n)y_c(n) \qquad (8)$$

Then, the signal is delayed by one sample per each delay element 404 of a tapped delay line 403. Apart from a path 405 carrying the actual signal the signal branches carrying the delayed signals are complex conjugated by conjugators 406 and multiplied by second multipliers 407 by the non-delayed received signal. At each branch the signal is summed over the carriers by adders 408 and accumulated over a predefined interval (also referred to as correlation window) by accumulators 409. The signal at the output of the kth branch accumulator 409 can be written as

$$z_k = \sum_{n=0}^{M-1}\sum_{c=0}^{C-1} \hat{h}_c(n)\hat{h}_c^*(n-k) \qquad (9)$$

where M is the predefined accumulation length and represents an estimate of the auto correlation function at lag k. Normalizers 410 normalize lag $k = K - \kappa$ with respect to reference lag K according to

$$\tilde{z}_\kappa = |\hat{z}_{K-\kappa}|\left(\frac{\hat{z}_{K-\kappa}}{|\hat{z}_{K-\kappa}|}\right)^{K/(K-\kappa)} \qquad (10)$$

The phase normalized ACF bins are summed up by a second adder 411 wherein previous ACF results stored in a second internal storage 412 are added to the current results.

The output of the second adder can be written as

$$\bar{z}_K(p) = \bar{z}_K(p-1) + \sum_{\kappa=1}^{K} \tilde{z}_\kappa \qquad (11)$$

where p is the subframe counter. Finally, an angle extractor 413 extracts the angle of the accumulated ACF bin and a divider 414 divides the extracted angle by $2\pi T_s K$ to generate the estimation result

$$\hat{f}_{off} = \frac{\arg(\bar{z}_K(p))}{2\pi T_s k} \qquad (12)$$

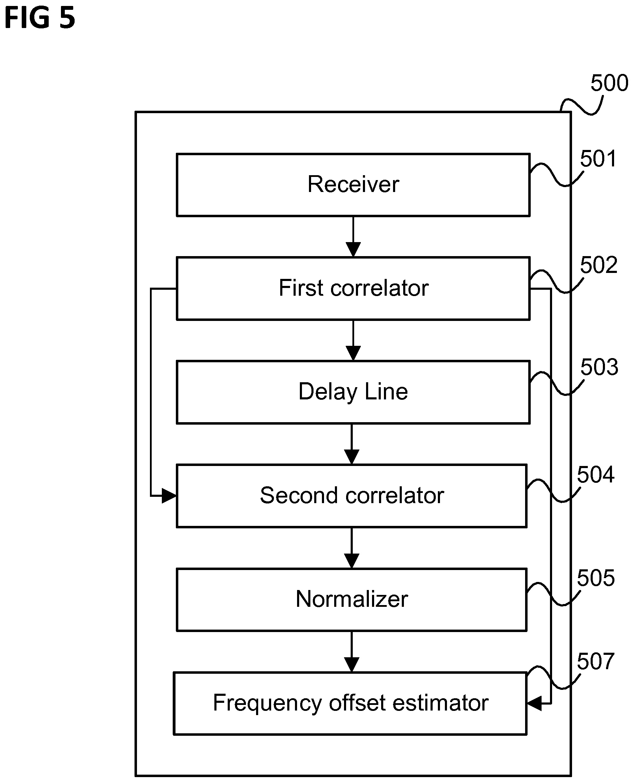

In summary, according to various examples, a communication device is provided as illustrated in figure 5.

Figure 5 shows a communication device 500.

The communication device 500 includes a receiver 501 configured to generate a received synchronization signal in response to receiving a synchronization signal and a first correlator 502 configured to generate a correlation signal by correlating the received synchronization signal with a reference synchronization signal.

The communication device 500 further includes a delay line 503 configured to delay the correlation signal by each of a plurality of delays and, for each delay, a second correlator 504 configured to correlate the delayed correlation signal with the correlation signal.

The communication device 500 further includes one or more normalizers 505 configured to generate one or more normalized correlation values, wherein the one or more normalizers include a normalizer 505 for each delay different from a reference delay (which is for example one of the plurality of delays) configured to generate a normalized correlation signal by normalizing, with respect to the reference delay, a correlation value which is based on the correlation of the delayed correlation signal with the correlation signal.

The communication device 500 further includes a frequency offset estimator 507 configured to estimate a frequency offset based on the one or more normalized correlation values.

According to various examples, in other words, a multi-lag auto-correlation based frequency offset estimator is provided with a normalization which allows a combination (e.g. a sum) of correlation values for different lags and thus a frequency offset estimation (e.g. based on a phase extraction) based on multiple different lags. The one or more normalized correlation values may for example be multiple correlation values normalized to a reference delay (reference lag). The reference delay may or may not be one of the plurality of delays. Accordingly, the frequency offset estimation may be performed based on a combination of multiple normalized correlation values or based on a combination of one or more normalized correlation values and a correlation value generated for the reference delay (which does not need to be normalized).

The processing may be performed in the digital domain such that the various signals correspond to sequences of digital (e.g. complex) values.

The communication device (e.g. the receiver, the correlators, the delay line, the normalizers and the frequency offset estimator) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be at least partially be implemented by a transceiver may for example be at least partially implemented by a modem (e.g. an LTE modem), a baseband processor or other transceiver components or also by an application processor. The communication device may for example be a communication terminal such as a portable phone and may include typical communication terminal devices such as a transceiver (including e.g. a baseband processor, one or more filters, transmit chains, receive chains, amplifiers etc.), an antenna, a subscriber identity module, an application processor, a memory, a display, a battery, a speaker, a microphone etc.

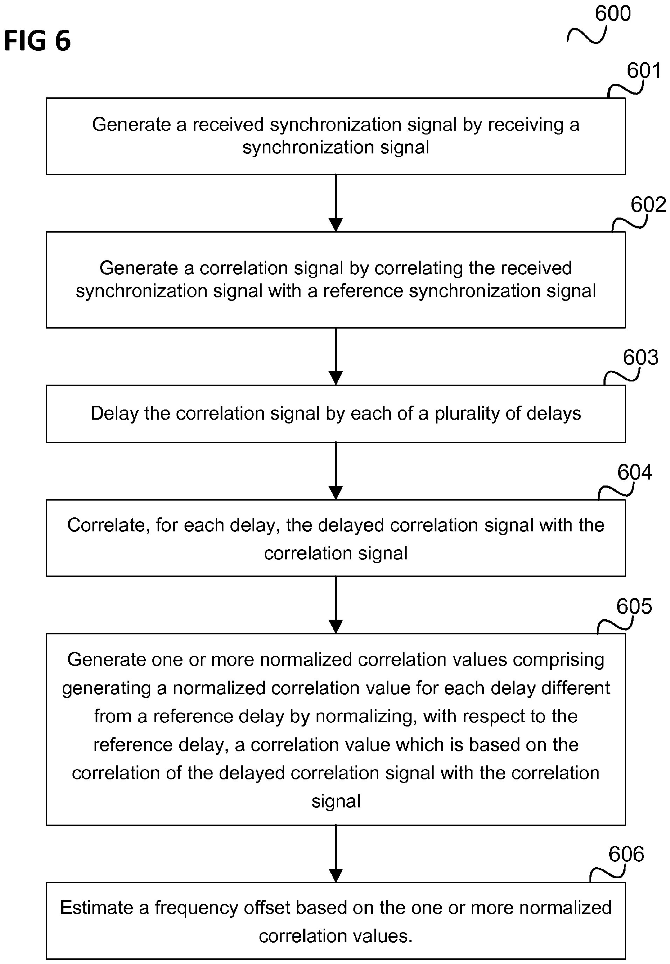

The communication device 500 for example performs a method as illustrated in figure 6.

Figure 6 shows a flow diagram 600 illustrating a method for estimating a frequency offset, e.g. carried out by a communication device.

In 601, the communication device generates a received synchronization signal in response to receiving a synchronization signal.

In 602, the communication device generates a correlation signal by correlating the received synchronization signal with a reference synchronization signal.

In 603, the communication device delays the correlation signal by each of a plurality of delays.

In 604, the communication device correlates, for each delay, the delayed correlation signal with the correlation signal.

In 605, the communication device generates one or more normalized correlation values including generating a normalized correlation value for each delay different from a reference delay by normalizing, with respect to the reference delay, a correlation value which is based on the correlation of the delayed correlation signal with the correlation signal.

In 606, the communication device estimates a frequency offset based on the one or more normalized correlation values.

The following examples pertain to further exemplary implementations.

Example 1 is a communication device as illustrated in figure 5.

In Example 2, the subject-matter of Example 1 may optionally comprise a memory storing the reference synchronization signal.

In Example 3, the subject-matter of any one of Examples 1-2 may optionally comprise the reference synchronization signal being a narrowband primary synchronization signal.

In Example 4, the subject-matter of any one of Examples 1-3 may optionally comprise the delays of the plurality of delays being different.

In Example 5, the subject-matter of any one of Examples 1-4 may optionally comprise the plurality of delays being an increasing sequence of delays.

In Example 6, the subject-matter of any one of Examples 5 may optionally comprise each delay of the sequence of delays being an integer multiple of the first delay of the sequence of delays.

In Example 7, the subject-matter of any one of Examples 5-6 may optionally comprise the sequence of delays comprising for each integer between 1 and a predetermined maximum integer a delay equal to the first delay of the sequence of delays multiplied with the integer.

In Example 8, the subject-matter of any one of Examples 1-7 may optionally comprise the receiver being configured to generate the received synchronization signal by sampling received values of the synchronization signal.

In Example 9, the subject-matter of any one of Examples 1-8 may optionally comprise each delay of the plurality of delays being an integer multiple of the sampling time.

In Example 10, the subject-matter of any one of Examples 1-9 may optionally comprise the second correlator being configured to correlate the delayed correlation signal with the correlation signal by complex conjugation of one of them and multiplying the result of the complex conjugation with the other.

In Example 11, the subject-matter of any one of Examples 1-10 may optionally comprise the reference delay being the maximum delay of the plurality of delays.

In Example 12, the subject-matter of any one of Examples 1-11 may optionally comprise the correlation value being based on the correlation of the delayed correlation signal and the correlation signal being based on an accumulation of correlation results between the delayed correlation signal and the correlation signal over a predetermined correlation window.

In Example 13, the subject-matter of any one of Examples 1-12 may optionally comprise the correlation value being based on the correlation of the delayed correlation signal and the correlation signal being based on a sum of correlation results between the delayed correlation signal and the correlation signal over a predetermined number of sub-carriers.

In Example 14, the subject-matter of any one of Examples 1-13 may optionally comprise the normalizer for a delay being configured to normalize the correlation value based on a relation of the size of the reference delay to the delay.

In Example 15, the subject-matter of any one of Examples 1-14 may optionally comprise the normalizer for a delay being configured to normalize the correlation value based on dividing the phase of the correlation value by a relation between the reference delay and the delay.

In Example 16, the subject-matter of any one of Examples 1-15 may optionally comprise a combiner configured to generate a combined correlation value by combining the one or more normalized correlation values with a correlation value for the reference delay which is based on the correlation of the delayed correlation signal with the correlation signal for the reference delay, wherein the frequency offset estimator is configured to estimate a frequency offset based on the combined correlation value.

In Example 17, the subject-matter of Example 16 may optionally comprise the combiner being configured to generate the combined correlation value by summing the one or more normalized correlation values with the correlation value for the reference delay.

In Example 18, the subject-matter of any one of Examples 16-17 may optionally comprise the frequency offset estimator being configured to estimate the frequency offset based on the phase of the combined correlation value.

In Example 19, the subject-matter of any one of Examples 16-18 may optionally comprise the frequency offset estimator being configured to estimate the frequency offset based on a combination of the combined correlation value with a combined correlation value generated for a preceding correlation window.

In Example 20, the subject-matter of Example 19 may optionally comprise the frequency offset estimator being configured to estimate the frequency offset based on the phase of the combination.

In Example 21, the subject-matter of any one of Examples 1-20 may optionally comprise an oscillator and a controller configured to adjust a frequency signal which based on an output of the oscillator based on the frequency offset.

Example 22 is a method for estimating a frequency offset as illustrated in figure 6.

In Example 23, the subject-matter of Example 22 may optionally comprise storing the reference synchronization signal.

In Example 24, the subject-matter of any one of Examples 22-23 may optionally comprise the reference synchronization signal being a narrowband primary synchronization signal.

In Example 25, the subject-matter of any one of Examples 22-24 may optionally comprise the delays of the plurality of delays being different.

In Example 26, the subject-matter of any one of Examples 22-25 may optionally comprise the plurality of delays being an increasing sequence of delays.

In Example 27, the subject-matter of Example 26 may optionally comprise each delay of the sequence of delays being an integer multiple of the first delay of the sequence of delays.

In Example 28, the subject-matter of any one of Examples 26-27 may optionally comprise the sequence of delays comprising for each integer between 1 and a predetermined maximum integer a delay equal to the first delay of the sequence of delays multiplied with the integer.

In Example 29, the subject-matter of any one of Examples 22-28 may optionally comprise generating the received synchronization signal by sampling received values of the synchronization signal.

In Example 30, the subject-matter of any one of Examples 22-29 may optionally comprise each delay of the plurality of delays being an integer multiple of the sampling time.

In Example 31, the subject-matter of any one of Examples 22-30 may optionally comprise correlating the delayed correlation signal with the correlation signal by complex conjugation of one of them and multiplying the result of the complex conjugation with the other.

In Example 32, the subject-matter of any one of Examples 22-31 may optionally comprise the reference delay being the maximum delay of the plurality of delays.

In Example 33, the subject-matter of any one of Examples 22-32 may optionally comprise the correlation value being based on the correlation of the delayed correlation signal and the correlation signal being based on an accumulation of correlation results between the delayed correlation signal and the correlation signal over a predetermined correlation window.

In Example 34, the subject-matter of any one of Examples 22-33 may optionally comprise the correlation value being based on the correlation of the delayed correlation signal and the correlation signal being based on a sum of correlation results between the delayed correlation signal and the correlation signal over a predetermined number of sub-carriers.

In Example 35, the subject-matter of any one of Examples 22-34 may optionally comprise normalizing the correlation value based on a relation of the size of the reference delay to the delay.

In Example 36, the subject-matter of any one of Examples 22-35 may optionally comprise normalizing the correlation value based on dividing the phase of the correlation value by a relation between the reference delay and the delay.

In Example 37, the subject-matter of any one of Examples 22-36 may optionally comprise generating a combined correlation value by combining the one or more normalized correlation values with a correlation value for the reference delay which is based on the correlation of the delayed correlation signal with the correlation signal for the reference delay, wherein the frequency offset is estimated based on the combined correlation value.

In Example 38, the subject-matter of Example 37 may optionally comprise generating the combined correlation value by summing the one or more normalized correlation values with the correlation value for the reference delay.

In Example 39, the subject-matter of any one of Examples 37-38 may optionally comprise estimating the frequency offset based on the phase of the combined correlation value.

In Example 40, the subject-matter of any one of Examples 37-39 may optionally comprise estimating the frequency offset based on a combination of the combined correlation value with a combined correlation value generated for a preceding correlation window.

In Example 41, the subject-matter of Example 40 may optionally comprise estimating the frequency offset based on the phase of the combination.

In Example 42, the subject-matter of any one of Examples 22-41 may optionally comprise adjusting a frequency signal which based on an output of an oscillator based on the frequency offset.

According to a further example, a communication device is provided including a frequency offset estimator configured to correlate a received synchronization sequence with a pre-determined reference for the synchronization sequence to generate a first correlation sequence, to generate a plurality of delayed versions of the first correlation sequence, to correlate each delayed version of the first correlation sequence with the undelayed first correlation sequence to generate a second correlation sequence, to generate at least one correlation value from the second correlation sequence (e.g. by accumulation over a certain window and/or a certain number of sub-carriers), to normalize the correlation values to the same delay and to estimate a frequency offset based on a combination of the normalized correlation values.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1. A communication device comprising:

   a receiver configured to generate a received synchronization signal in response to receiving a synchronization signal;
   a first correlator configured to generate a correlation signal by correlating the received synchronization signal with a reference synchronization signal;
   a delay line configured to delay the correlation signal by each of a plurality of delays;
   a second correlator for each delay configured to correlate the delayed correlation signal with the correlation signal;
   one or more normalizers configured to generate one or more normalized correlation values, wherein the one or more normalizers comprise a normalizer for each delay different from a reference delay configured to generate a normalized correlation signal by normalizing, with respect to the reference delay, a correlation value which is based on the correlation of the delayed correlation signal with the correlation signal;
   a frequency offset estimator configured to estimate a frequency offset based on the one or more normalized correlation values.

2. The communication device of claim 1 further comprises a memory to store the reference synchronization signal.

3. The communication device of claim 1 or 2, wherein the reference synchronization signal is a narrowband primary synchronization signal.

4. The communication device of any one of claims 1 to 3, wherein the delays of the plurality of delays are different.

5. The communication device of any one of claims 1 to 4, wherein the plurality of delays is an increasing sequence of delays.

6. The communication device of claim 5, wherein each delay of the sequence of delays is an integer multiple of the first delay of the sequence of delays.

7. The communication device of claim 5 or 6, wherein the sequence of delays comprises for each integer between 1 and a predetermined maximum integer a delay equal to the first delay of the sequence of delays multiplied with the integer.

8. The communication device of any one of claims 1 to 7, wherein the receiver is configured to generate the received synchronization signal by sampling received values of the synchronization signal.

9. The communication device of any one of claims 1 to 8, wherein each delay of the plurality of delays is an integer multiple of the sampling time.

10. The communication device of any one of claims 1 to 9, wherein the second correlator is configured to correlate the delayed correlation signal with the correlation signal by complex conjugation of one of them and multiplying the result of the complex conjugation with the other.

11. The communication device of any one of claims 1 to 10, wherein the reference delay is the maximum delay of the plurality of delays.

12. The communication device of any one of claims 1 to 11, wherein the correlation value is based on the correlation of the delayed correlation signal and the correlation signal is based on an accumulation of correlation results between the delayed correlation signal and the correlation signal over a predetermined correlation window.

13. The communication device of any one of claims 1 to 12, wherein the correlation value is based on the correlation of the delayed correlation signal and the correlation signal is based on a sum of correlation results between the delayed correlation signal and the correlation signal over a predetermined number of sub-carriers.

**14.** The communication device of any one of claims 1 to 13, wherein the normalizer for a delay is configured to normalize the correlation value based on a relation of the size of the reference delay to the delay.

**15.** A method for estimating a frequency offset comprising:

generating a received synchronization signal in response to receiving a synchronization signal;
generating a correlation signal by correlating the received synchronization signal with a reference synchronization signal;
delaying the correlation signal by each of a plurality of delays;
correlating, for each delay, the delayed correlation signal with the correlation signal;
generating one or more normalized correlation values comprising generating a normalized correlation value for each delay different from a reference delay by normalizing, with respect to the reference delay, a correlation value which is based on the correlation of the delayed correlation signal with the correlation signal;
estimating a frequency offset based on the one or more normalized correlation values.

**FIG 1**

EP 3 425 864 A1

**FIG 2**

# FIG 3

Frequency offset 1 KHz    301

Frequency offset 100 Hz    302

**FIG 4**

400

$y_c(n)$

401 CC NPSS Seq.

402

404  405

403

$z^{-1}$

404

$z^{-1}$

404

$z^{-1}$

406  * lag 1

406  * lag 2

406  * lag K

407

407

407

408  409

Accum  NORM

408  409

Accum  NORM

408  409

Accum

K-κ-1  410

K-κ  410

412  previous ACF results

411  +

413  angle

414

$1/(2\pi\, T_S\, K)$

$\hat{f}_{off}$

subcarrier 0
subcarrier c
subcarrier C-1

EP 3 425 864 A1

# FIG 5

500

Receiver — 501

First correlator — 502

Delay Line — 503

Second correlator — 504

Normalizer — 505

Frequency offset estimator — 507

# FIG 6

600

601

> Generate a received synchronization signal by receiving a synchronization signal

602

> Generate a correlation signal by correlating the received synchronization signal with a reference synchronization signal

603

> Delay the correlation signal by each of a plurality of delays

604

> Correlate, for each delay, the delayed correlation signal with the correlation signal

605

> Generate one or more normalized correlation values comprising generating a normalized correlation value for each delay different from a reference delay by normalizing, with respect to the reference delay, a correlation value which is based on the correlation of the delayed correlation signal with the correlation signal

606

> Estimate a frequency offset based on the one or more normalized correlation values.

Europäisches Patentamt
European Patent Office
Office européen des brevets

# EUROPEAN SEARCH REPORT

Application Number

EP 17 17 9951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/259904 A1 (WANG XIN [CN] ET AL) 23 October 2008 (2008-10-23) * paragraph [0027] - paragraph [0061]; figures 2-8 * | 1-15 | INV. H04L27/26 |
| A | US 7 058 151 B1 (KIM KWANG-CHUL [KR]) 6 June 2006 (2006-06-06) * page 2 - page 3; figures 2,3 * | 1-15 | |
| A | US 2007/230591 A1 (CHOI JOONSANG [KR] ET AL) 4 October 2007 (2007-10-04) * paragraph [0046] - paragraph [0063] * | 1-15 | |

TECHNICAL FIELDS SEARCHED (IPC)

H04L

The present search report has been drawn up for all claims

| Place of search | Date of completion of the search | Examiner |
|---|---|---|
| Berlin | 18 December 2017 | González Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 9951

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2017

| Patent document cited in search report | | Publication date | Patent family member(s) | | | Publication date |
|---|---|---|---|---|---|---|
| US 2008259904 | A1 | 23-10-2008 | CN | 101291310 | A | 22-10-2008 |
| | | | JP | 5109754 | B2 | 26-12-2012 |
| | | | JP | 2008271539 | A | 06-11-2008 |
| | | | US | 2008259904 | A1 | 23-10-2008 |
| US 7058151 | B1 | 06-06-2006 | AT | 274270 | T | 15-09-2004 |
| | | | CN | 1355971 | A | 26-06-2002 |
| | | | DE | 60013129 | D1 | 23-09-2004 |
| | | | DE | 60013129 | T2 | 18-08-2005 |
| | | | EP | 1188266 | A1 | 20-03-2002 |
| | | | JP | 3542581 | B2 | 14-07-2004 |
| | | | JP | 2003502903 | A | 21-01-2003 |
| | | | KR | 20010002477 | A | 15-01-2001 |
| | | | US | 7058151 | B1 | 06-06-2006 |
| | | | WO | 0077961 | A1 | 21-12-2000 |
| US 2007230591 | A1 | 04-10-2007 | CN | 101406017 | A | 08-04-2009 |
| | | | EP | 2008417 | A1 | 31-12-2008 |
| | | | KR | 20070098462 | A | 05-10-2007 |
| | | | US | 2007230591 | A1 | 04-10-2007 |
| | | | WO | 2007111431 | A1 | 04-10-2007 |

EPO FORM P0459

For more details about this annex : see Official Journal of the European Patent Office, No. 12/82